# EUROPEAN PATENT APPLICATION

(11) **EP 4 806 692 A1**
(43) Date of publication of application: **16.09.2026**
(21) Application number: 25163450.7
(22) Date of filing: 13.03.2025
(51) Int. Cl.: B60K 17/02, B60K 1/02, B60K 17/04

(54) **DRIVE UNIT FOR ELECTRIC VEHICLE AND ASSOCIATED ELECTRIC VEHICLE**

(71) Applicant: VOLVO TRUCK CORPORATION, 405 08 Göteborg (SE)
(72) Inventor: HEDMAN, Anders, 442 67 MARSTRAND (SE)
(74) Representative: Lavoix

(57) **Abstract**

A drive unit (20) for an electric vehicle, comprising: an output shaft; a planetary gear train (40) and a main gearwheel (50) both coaxial with the output shaft, the main gearwheel being selectively engageable with two input members of the planetary gear train; a first motor assembly (60) having an electric motor (62), a motor shaft (64) and a motor gearwheel (66) non-selectively rotationally connected with said motor shaft and meshing with the main gearwheel; and a second motor assembly (70) having an electric motor (72), a motor shaft (74), an intermediate shaft (76) coaxial with said motor shaft, a motor gearwheel (78) fixed to said intermediate shaft and meshing with the main gearwheel and a clutch (80) to selectively rotationally connect or disconnect said motor shaft and said intermediate shaft. The second electric motor is shorter than the first electric motor and both are parallel to the output shaft.

## Description

### TECHNICAL FIELD

The disclosure relates generally to electromobility applied to vehicles, in particular to heavy-duty vehicles. In particular aspects, the disclosure relates to a drive unit for an electric vehicle and a heavy-duty vehicle comprising such a drive unit. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To decrease environmental impacts of heavy-duty vehicles, transport industry is moving towards electro mobility to replace internal combustion engines by electric motors. Traditionally, the electric motor is positioned in the same place as the internal combustion engine it replaces, i.e. under the truck cab, and may use a transmission.

However, positioning one or more electric motors as close as possible to the wheels, directly on their axle, is advantageous. Such configuration is known as electric axle or "E-axle" configuration and improves performance of the vehicle, by reducing losses in the transmission. In addition, such a configuration is more compact, freeing up space available for batteries.

One of the challenges for such a configuration is to make the electric axle as compact as possible, so as not to interfere with other vehicle features, such as the suspension or braking system. Another challenge for such a configuration is to provide sufficient power to the vehicle and flexibility in the use of the electric axle, while keeping the electric axle compact.

The invention aims to provide a particularly compact drive unit while providing sufficient power and flexibility.

### SUMMARY

According to a first aspect of the disclosure, a drive unit, for an electric vehicle, comprises:
- at least one output shaft, extending along a main axis,
- a planetary gear train, coaxially mounted with the at least one output shaft, the planetary gear train comprising a first input member, a second input member and an output member, the output member being connected to the at least one output shaft so as to drive the at least one output shaft, the output member engaging with the first input member and with the second input member,
- a main gearwheel, coaxially mounted with the at least one output shaft, the first input member of the planetary gear train being selectively engageable and disengageable with the main gearwheel so as to be selectively rotationally connected with the main gearwheel and driven by the main gearwheel, the second input member of the planetary gear train being selectively engageable and disengageable with the main gearwheel so as to be selectively rotationally connected with the main gearwheel and driven by the main gearwheel,
- a first motor assembly, comprising:
   ∘ a first electric motor, extending along a first motor axis parallel to the main axis,
   ∘ a first motor shaft, extending along the first motor axis and rotationally connected with a rotor of the first electric motor, and
   ∘ a first motor gearwheel, non-selectively rotationally connected with the first motor shaft and meshing with the main gearwheel, so that the first electric motor is configured to drive the main gearwheel via the first motor gearwheel,
- a second motor assembly, comprising:
   ∘ a second electric motor, extending along a second motor axis parallel to the main axis,
   ∘ a second motor shaft, extending along the second motor axis and rotationally connected with a rotor of the second electric motor,
   ∘ an intermediate shaft, coaxial with the second motor shaft,
   ∘ a second motor gearwheel, non-selectively rotationally connected with the intermediate shaft and meshing with the main gearwheel, and
   ∘ a clutch, coaxial with the second motor shaft and the intermediate shaft and operable between:
      ▪ an engaged configuration, in which the second motor shaft and the intermediate shaft are rotationally connected so that the second electric motor is configured to drive the main gearwheel via the clutch and the second motor gearwheel, and
      ▪ a neutral configuration, in which the second motor shaft and the intermediate shaft are rotationally disconnected so that the second electric motor is configured not to drive the main gearwheel.
Furthermore, a length of the first electric motor, measured parallel to the main axis, is greater than a length of the second electric motor, measured parallel to the main axis.

The first aspect of the disclosure may seek to provide a drive unit capable of producing more power, thanks to the second electric motor, while being flexible in use, thanks to the clutch allowing the second electric motor to be disconnected when not needed and while being as axially compact as a drive unit comprising only one electric motor, thanks to the second electric motor being shorter than the first electric motor to accommodate the clutch without increasing the drive unit axial dimensions. A technical benefit may include obtaining a more powerful and versatile drive unit while reducing the conflict with other components of the electric vehicle, such as the suspension or braking system.

Optionally in some examples, including in at least one preferred example, a first distance, measured parallel to the main axis between the first motor gearwheel and an extremity of the first electric motor opposite to the first motor shaft, is equal to a second distance, measured parallel to the main axis between the second motor gearwheel and an extremity of the second electric motor opposite to the second motor shaft. A technical benefit may include ensuring the axial dimensions of the drive unit are not increased by the addition of the clutch.

Optionally in some examples, including in at least one preferred example, the first motor gearwheel is identical to the second motor gearwheel. A technical benefit may include obtaining a drive unit with a simpler construction.

Optionally in some examples, including in at least one preferred example, the first motor gearwheel is aligned with the second motor gearwheel, along the main axis. A technical benefit may include simplifying the connection of the first and second electric motors to the main gearwheel.

Optionally in some examples, including in at least one preferred example, the intermediate shaft is located between the second motor gearwheel and the second motor shaft, along the second motor axis. A technical benefit may include increasing the axial compactness of the drive unit.

Optionally in some examples, including in at least one preferred example, the first electric motor and the second electric motor are both located on a same side of the main gearwheel, along the main axis. A technical benefit may include increasing the axial compactness of the drive unit.

Optionally in some examples, including in at least one preferred example, the clutch is a dog clutch. A technical benefit may include allowing easy and reliable coupling between the intermediate shaft and the second motor shaft.

Optionally in some examples, including in at least one preferred example, the clutch comprises a connecting wheel, fixedly secured onto the intermediate shaft and comprising splines; and an engaging sleeve, concentrically mounted around the second motor shaft and axially moveable relative to the second motor shaft along the second motor axis between an engaged position, in which the engaging sleeve is engaged with the splines of the connecting wheel so that the clutch is in its engaged configuration, and a neutral position, in which the engaging sleeve is disengaged from the splines of the connecting wheel so that the clutch is in its neutral configuration. A technical benefit may include allowing easy and reliable coupling between the intermediate shaft and the second motor shaft, with minimal axial dimensions.

Optionally in some examples, including in at least one preferred example, the first motor axis and the second motor axis are equidistant from the main axis. A technical benefit may include increasing the radial compactness of the drive unit and simplifying its conception.

Optionally in some examples, including in at least one preferred example, an extremity of the first electric motor opposite to the first motor shaft is aligned with an extremity of the second electric motor opposite to the second motor shaft, along the main axis. A technical benefit may include increasing the axial compactness of the drive unit.

Optionally in some examples, including in at least one preferred example, a diameter of the rotor of the first electric motor is equal to a diameter of the rotor of the second electric motor. A technical benefit may include offering a modular conception of the two electric motors, with the two electric motors sharing common parts.

Optionally in some examples, including in at least one preferred example, the drive unit further comprises a carrying structure, the main gearwheel being fixedly secured to the carrying structure and rotationally connected with the carrying structure, the planetary gear train being mounted inside of the carrying structure. A technical benefit may include increasing the axial compactness of the drive unit.

Optionally in some examples, including in at least one preferred example, the drive unit further comprises a first control sleeve, configured to selectively rotationally connect or rotationally disconnect the first input member with the main gearwheel, and a second control sleeve, configured to selectively rotationally connect or rotationally disconnect the second input member with the main gearwheel. A technical benefit may include allowing the first and second input member to reliably rotationally connect or rotationally disconnect with the main gearwheel.

Optionally in some examples, including in at least one preferred example, the drive unit further comprises a housing, and the first input member and the second input member are both selectively engageable and disengageable with the housing. A technical benefit may include allowing the planetary gear train to reach three distinct reduction ratios, by selectively engage the first and second input members with the main gearwheel or the housing.

Optionally in some examples, including in at least one preferred example, the first control sleeve is further configured to selectively engage or disengage the first input member with the housing, and the second control sleeve is further configured to selectively engage or disengage the second input member with the housing. A technical benefit may include allowing the first and second input member to be reliably engaged or disengaged with the housing.

Optionally in some examples, including in at least one preferred example, the first input member is a ring gearwheel of the planetary gear train, the second input member is a sun gearwheel of the planetary gear train and the output member is a planet carrier of the planetary gear train. A technical benefit may include using an efficient and reliable configuration for the planetary gear train.

Optionally in some examples, including in at least one preferred example, the first motor shaft is securely fixed to the rotor of the first electric motor and directly driven by the rotor of the first electric motor and the second motor shaft is securely fixed to the rotor of the second electric motor and directly driven by the rotor of the second electric motor. A technical benefit may include increasing the axial compactness of the drive unit by avoiding intermediate parts between the motor shafts and the rotor of the electric motors.

Optionally in some examples, including in at least one preferred example, the drive unit does not comprise any reduction gear stage between the first motor gearwheel and the rotor of the first electric motor, between the second motor gearwheel and the rotor of the second electric motor, between the main gearwheel and the first input member of the planetary gear train nor between the main gearwheel and the second input member of the planetary gear train. A technical benefit may include increasing the axial compactness of the drive unit by avoiding additional parts.

Optionally in some examples, including in at least one preferred example, the first electric motor is configured to always be engaged with the first motor gearwheel, the drive unit having no means for disconnecting the first electric motor from the first motor gearwheel. A technical benefit may include increasing the axial compactness of the drive unit by avoiding additional parts.

Optionally in some examples, including in at least one preferred example, the at least one output shaft comprises a left drive shaft and a right drive shaft, both extending along the main axis and configured to drive wheels of the electric vehicle, the drive unit further comprises a differential, coaxially mounted with the left drive shaft and the right drive shaft, and configured to drive the left drive shaft and the right drive shaft, and the output member is connected to the differential so as to drive the differential. A technical benefit may include allowing the drive unit to directly drive wheels of the vehicle.

Optionally in some examples, including in at least one preferred example, the first electric motor and the second electric motor both extend at the differential, along the main axis. A technical benefit may include increasing the axial compactness of the drive unit.

Optionally in some examples, including in at least one preferred example, the output member of the planetary gear train is integral with an input of the differential. A technical benefit may include increasing the axial compactness of the drive unit.

Optionally in some examples, including in at least one preferred example, the differential is mounted inside of the carrying structure. A technical benefit may include increasing the axial compactness of the drive unit.

According to a second aspect of the disclosure, an electric vehicle comprises the drive unit described here above. The second aspect of the disclosure may seek to provide a drive unit capable of producing more power, thanks to the second electric motor, while being flexible in use, thanks to the clutch allowing the second electric motor to be disconnected when not needed and while being as axially compact as a drive unit comprising only one electric motor, thanks to the second electric motor being shorter than the first electric motor to accommodate the clutch without increasing the drive unit axial dimensions. A technical benefit may include obtaining a more powerful and versatile drive unit while reducing the conflict with other components of the electric vehicle, such as the suspension or braking system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary heavy-duty vehicle comprising a drive unit according to an example.
**FIG. 2** is a schematic view of the drive unit of Figure 1, the drive unit being in a first configuration.
**FIG. 3** is a schematic view of the drive unit of Figures 1-2, the drive unit being in a second configuration.
**FIG. 4** is a schematic view of another exemplary drive unit.

### DETAILED DESCRIPTION

The detailed description set forth below provides information and examples of the disclosed technology with sufficient detail to enable those skilled in the art to practice the disclosure.

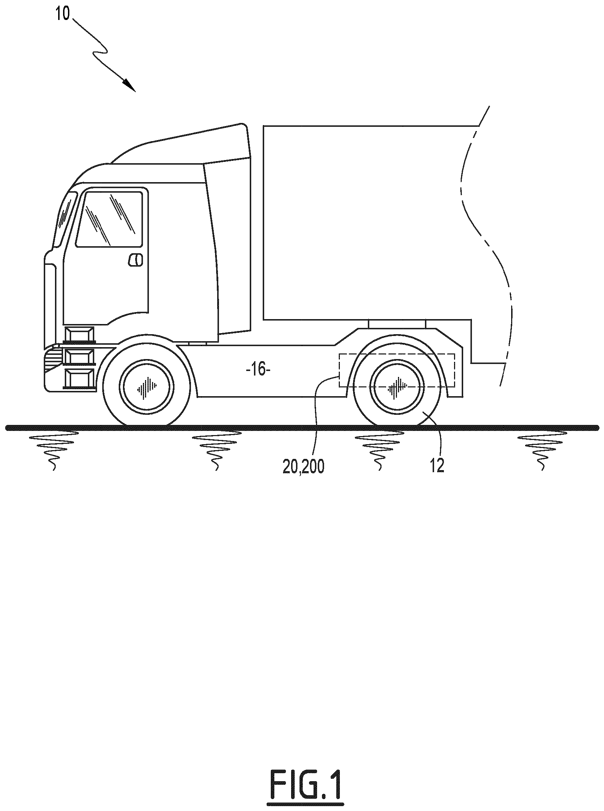

An electric vehicle 10 according to a first example is shown in Figure 1. The electric vehicle 10 is, for example, a heavy-duty vehicle, such as a truck, a bus or a construction equipment, or another type of vehicle, such as an automobile.

The electric vehicle 10 comprises a drive unit 20, used to drive wheels of the electric vehicle 10. In the example, the drive unit 20 is used to drive a left rear wheel 12 and a right rear wheel 14 of the electric vehicle, only the left rear wheel 12 being visible on Figure 1.

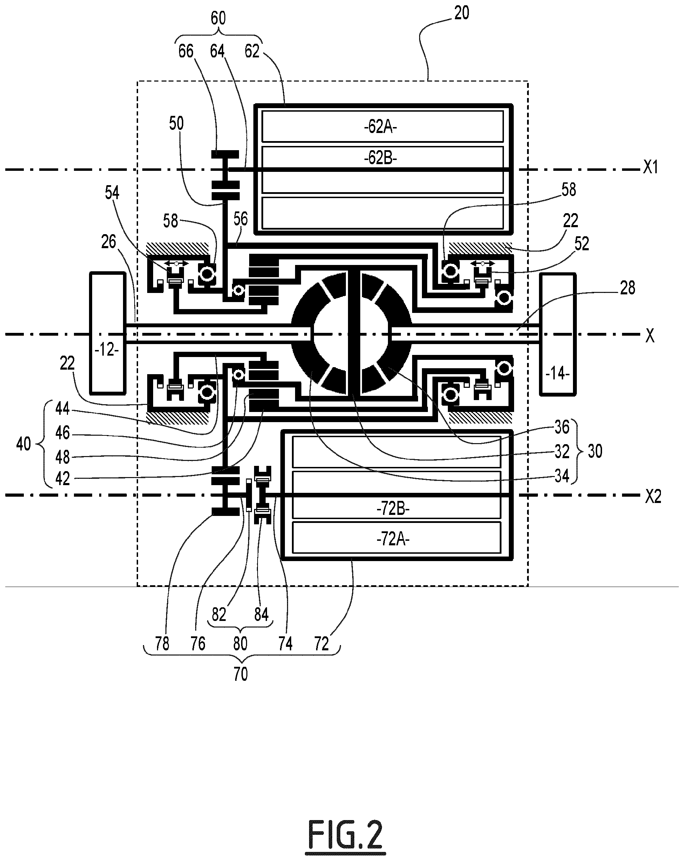

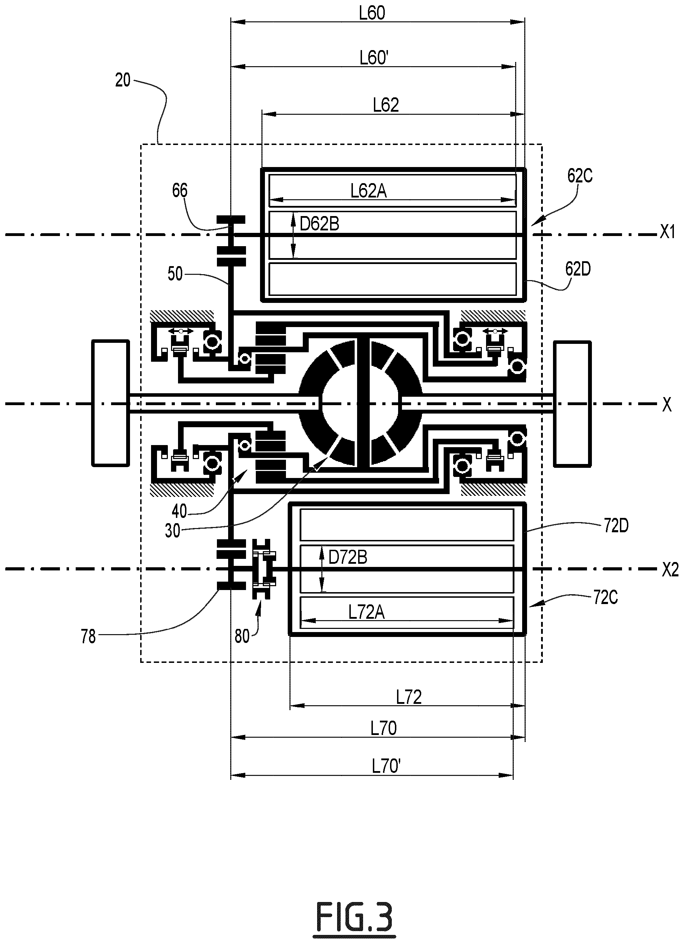

The drive unit 20 is shown in more details in Figures 2 and 3.

The drive unit 20 is designed to be fitted on a chassis 16 of the electric vehicle 10. For example, the wheel drive unit 20 is designed to be fastened to a suspension system of the electric vehicle 10, which, itself, is fastened to the chassis 16.

The drive unit 20 comprises a main axis X, which is an axis of rotation of the left and right wheels 12, 14 of the electric vehicle 10.

The drive unit 20 comprises a housing 22, only shown schematically on the figures.

The drive unit 20 comprises a left drive shaft 26, connected to the left wheel 12 to drive the left wheel, and a right drive shaft 28, connected to the right wheel 14 to drive the right wheel. Both left and right drive shafts 26, 28 extend along the main axis X and are able to rotate around the main axis X relative to the housing 22.

The drive unit 20 comprises a differential 30, coaxially mounted with the left and right drive shafts 26, 28, i.e. mounted around the main axis X. In a known manner, the differential 30 comprises an input member 32 and two output members 34, 36, respectively connected to the left drive shaft 26 and to the right drive shaft 28. For example, the input member 32 is a carrier and the output members 34, 36 are pinions mounted on the left and right drive shafts 26, 28. Hence, the differential 30 is configured to drive the left and right drive shafts 24, 26.

The drive unit 20 comprises a planetary gear train 40, or epicyclic gear train, coaxially mounted around the main axis X, more precisely coaxially mounted around one of the left and right drive shafts 26, 28. In the example, the planetary gear train 40 is mounted around the left drive shaft 26.

The planetary gear train 40 comprises a first input member 42, a second input member 44 and an output member 46, the output member 46 being rotationally connected to the differential 30, more precisely to the input member 32 of the differential.

The output member 46 engages with the first input member 42 and with the second input member 44 and is configured to drive the input member 32 of the differential 30. In the example, the output member 46 of the planetary gear train 40 is integral with the input member 32 of the differential 30.

In the example, the first input member 42 is a ring gearwheel of the planetary gear train 40, the second input member 44 is a sun gearwheel of the planetary gear train and the output member 46 is a planet carrier of the planetary gear train. Furthermore, the planetary gear train 40 also comprises planet gearwheels 48, mounted onto the planet carrier 46 and engaging, or meshing, with the ring gearwheel 42 and with the sun gearwheel 44. In other words, the planet carrier 46 engages with the ring gearwheel 42 and with the sun gearwheel 44 via the planet gearwheels 48.

The drive unit 20 comprises a main gearwheel 50, coaxially mounted with the left drive shaft 26 and the right drive shaft 28, i.e. with the planetary gear train 40. The main gearwheel 50 operates as an input for the planetary gear train 40, i.e. drives the planetary gear train 40.

The first input member 42 and the second input member 44 of the planetary gear train 40 are both selectively engageable and disengageable with the main gearwheel 50, so as to be respectively selectively rotationally connected with the main gearwheel and driven by the main gearwheel. In other words, the planetary gear train 40 is driven by the main gearwheel 50.

In the example, the first input member 42 and the second input member 44 of the planetary gear train 40 are both also selectively engageable and disengageable with the housing 22. As an alternative, not shown, one of the first input member 42 and the second input member 44 of the planetary gear train 40 is not engageable with the housing 22 while the other is selectively engageable and disengageable with the housing.

Hence, thanks to the first input member 42 and the second input member 44 being selectively engageable and disengageable with the housing 22 and with the main gearwheel 50, the planetary gear train 40 comprises four configurations: a neutral configuration, shown in Figures 2 and 3, in which the first input member 42 and the second input member 44 are disengaged from the housing 22 and from the main gearwheel 50; a first ratio configuration, in which the first input member 42 is engaged with the housing 22 and in which the second input member 44 is engaged with the main gearwheel 50; a second ratio configuration, in which the first input member 42 is engaged with the main gearwheel 50 and in which the second input member 44 is engaged with the housing 22, and a third ratio configuration, in which the first input member 42 is engaged with the main gearwheel 50 and in which the second input member 44 is engaged with the main gearwheel 50. In the neutral configuration of the planetary gear train 40, the main gearwheel 50 is thus disconnected from the differential 30 and does not drive the left and right wheels 12, 14. In the first, second and third ratio configuration of the planetary gear train 40, the main gearwheel 50 is drivingly connected to the differential 30, with three different reduction ratios, and drives the left and right wheels 12, 14.

In the example, the drive unit 20 comprises a first control sleeve 52, rotationally coupled with the first input member 42 and configured to selectively engage or disengage the first input member 42 with the main gearwheel 50 and with the housing 22. Practically speaking, the first control sleeve 52 is axially moveable along the main axis X between three positions: a neutral position, shown in Figures 2 and 3, in which the first input member 42 is decoupled, or disengaged, from the housing 22 and from the main gearwheel 50; a first engaged position, in which the first input member 42 is coupled, or rotationally connected, with the main gearwheel 50 and decoupled, or disengaged, from the housing 22; and a second engaged position, shown in Figure 3, in which the first input member 42 is decoupled, or disengaged, from the main gearwheel 50 and coupled, or rotationally connected, with the housing 22, i.e. in which the first input member 42 is prevented from rotating.

Similarly, the drive unit 20 comprises a second control sleeve 54, rotationally coupled with the second input member 44 and configured to selectively rotationally connect or rotationally disconnect the second input member 44 with the main gearwheel 50 and with the housing 22. The second control sleeve 54 operates similarly as the first control sleeve 52.

Preferably, the first control sleeve 52 and the second control sleeve 54 are moved along the main axis X by respective actuators, not shown. Said actuators are components producing a displacement of the control sleeves 52, 54 along the main axis X and are, for example, mechanical components, controlled by a driver of the electric vehicle 10 or automatically controlled, e.g. shift forks; or pneumatic, hydraulic or electric components, such as pneumatic actuators, a hydraulic cylinders or electric motors.

In the example, the drive unit 20 comprises a carrying structure 56, coaxially mounted around the left and right drive shafts 26, 28, i.e. around the main axis X. The carrying structure 56 is able to rotate around the main axis X relative to the housing 22. In the example, the carrying structure 56 is mounted on the housing 22 with bearings 58. Hence, the carrying structure is rotatably mounted on the housing with the bearings 58.

The main gearwheel 50 is fixedly secured to the carrying structure 56 and rotationally connected with the carrying structure. In other words, the carrying structure 56 rotates with the main gearwheel 50.

Practically speaking, to engage the first input member 42 with the main gearwheel 50, the first control sleeve 52 does not directly engage the first input member 42 with the main gearwheel, but directly engages the first input member 42 with the carrying structure 56 so that, with the first control sleeve in the first engaged position, the main gearwheel 50 is rotationally connected with the first input member 42. Similarly, to engage the second input member 44 with the main gearwheel 50, the second control sleeve 54 does not directly engage the second input member 44 with the main gearwheel, but directly engages the second input member 44 with the carrying structure 56.

Advantageously, the differential 30 and the planetary gear train 40 are mounted inside of the carrying structure 56, thus optimizing the compactness of the drive unit. Hence, the carrying structure 56 operates simultaneously as an input for the planetary gear train 40, being driven by the main gearwheel 50, and as a casing enclosing the planetary gear train 40 and the differential 30.

To drive the main gearwheel 50, the planetary gear train 40, the differential 30 and the wheels 12, 14, the drive unit 20 comprises a first motor assembly 60.

The first motor assembly 60 comprises a first electric motor 62, having a stator 62A and a rotor 62B; a first motor shaft 64 and a first motor gearwheel 66.

The first electric motor 62 extends along a first motor axis X1 parallel to the main axis X. In other words, the rotor 62B rotates about the first motor axis X1.

The first motor shaft 64 extends along the first motor axis X1 and is rotationally connected with the rotor 62B of the first electric motor 62. In other words, the first motor shaft 64 is directly connected to the rotor 62B. For example, the first motor shaft 64 is securely fixed to the rotor 62B of the first electric motor 62.

The first motor gearwheel 66 is non-selectively rotationally connected with the first motor shaft 64 and is meshing with the main gearwheel 50, so that the first electric motor 62 drives the main gearwheel 50 via the first motor shaft 64 and the first motor gearwheel 66.

In other words, the first electric motor 62 is always engaged with the first motor gearwheel 66, the drive unit 20 having no means for disconnecting the first electric motor 62 from the first motor gearwheel 66.

The fact that the first motor gearwheel 66 is non-selectively rotationally connected with the first motor shaft 64 means that the first motor gearwheel 66 is constantly rotationally connected with the first motor shaft 64, i.e. that the first motor gearwheel 66 is fixedly rotationally connected with the first motor shaft 64. In other words, the first motor assembly 60 does not comprises any disconnecting means, such as a clutch, to disconnect the first motor gearwheel 66 from the first electric motor 62.

In the example, the first motor gearwheel 66 is advantageously directly fixedly secured onto the first motor shaft 64. As an alternative, not shown, the first motor assembly 60 comprises intermediate parts arranged between the first motor gearwheel 66 and the first motor shaft 64, for example a reduction gear stage, such intermediate parts do not allow the first motor gearwheel 66 to be drivingly disconnected from the first electric motor 62.

The drive unit 20 also comprises a second motor assembly 70, to selectively drive the main gearwheel 50, the planetary gear train 40, the differential 30 and the wheels 12, 14.

The second motor assembly 70 comprises a second electric motor 72, having a stator 72A and a rotor 72B; a second motor shaft 74; an intermediate shaft 76; a second motor gearwheel 78 and a clutch 80.

The second electric motor 72 extends along a second motor axis X2 parallel to the main axis X. In other words, the rotor 72B rotates about the second motor axis X2 and is parallel to the rotor 62B.

The second motor shaft 74 extends along the second motor axis X2 and is rotationally connected with the rotor 72B of the second electric motor 72. In other words, the second motor shaft 74 is directly connected to the rotor 72B. For example, the second motor shaft 74 is securely fixed to the rotor 72B of the second electric motor 72.

The intermediate shaft 76 is coaxial with the second motor shaft 74. Moreover, the intermediate shaft 76 is located between the second motor gearwheel 78 and the second motor shaft 74, along the second motor axis X2.

The second motor gearwheel 78 is non-selectively rotationally connected with the intermediate shaft 76 and is meshing with the main gearwheel 50. In the example, the first motor gearwheel 66 and the second motor gearwheel 78 are aligned, along the main axis X.

The fact that the second motor gearwheel 78 is non-selectively rotationally connected with the intermediate shaft 76 means that the second motor gearwheel 78 is constantly rotationally connected with the intermediate shaft 76, i.e. that the second motor gearwheel 78 is fixedly rotationally connected with the intermediate shaft 76.

In the example, the second motor gearwheel 78 is advantageously directly fixedly secured onto the intermediate shaft 76. As an alternative, not shown, the second motor assembly 70 comprises intermediate parts arranged between the second motor gearwheel 78 and the intermediate shaft 76, for example a reduction gear stage.

The clutch 80 is coaxial with the second motor shaft 74 and the intermediate shaft 76 and is operable between an engaged configuration, in which the second motor shaft 74 and the intermediate shaft 76 are rotationally connected so that the second electric motor 72 is driving the main gearwheel 50 via the second motor shaft 74, the clutch 80, the intermediate shaft 76 and the second motor gearwheel 78, and a neutral configuration, in which the second motor shaft 74 and the intermediate shaft 76 are rotationally disconnected so that the second electric motor 72 is not driving the main gearwheel 50, i.e. is disconnected from the second motor gearwheel 78. The neutral configuration of the clutch 80 is shown in Figure 2 and the engaged configuration of the clutch 80 is shown in Figure 3.

Preferably, the clutch 80 is a dog clutch.

In the example, the clutch 80 comprises a connecting wheel 82, fixedly secured onto the intermediate shaft 76 and comprising splines, and an engaging sleeve 84, concentrically mounted around the second motor shaft 74 and axially moveable relative to the second motor shaft 74 along the second motor axis X2 between an engaged position, in which the engaging sleeve 84 is engaged with the splines of the connecting wheel 82 so that the clutch 80 is in its engaged configuration, and a neutral position, in which the engaging sleeve 84 is disengaged from the splines of the connecting wheel 82 so that the clutch 80 is in its neutral configuration. Practically speaking, the engaging sleeve 84 is rotationally connected with the second motor shaft 74. In the example, the engaging sleeve 84 is mounted on splines of the second motor shaft 74. As an alternative, not shown the second motor assembly 70 comprises intermediate parts arranged between the second motor shaft 74 and the clutch 80, for example a reduction gear stage.

In the example, the first motor gearwheel 66 is identical to the second motor gearwheel 78, i.e. they have the same number of teeth, so that a reduction ratio between the first motor shaft 64 and the main gearwheel 50 is identical to a reduction ratio between the second motor shaft 74 and the main gearwheel 50. Consequently, the first motor axis X1 and the second motor axis X2 are equidistant from the main axis X. Such conception is advantageous to simplify the conception of the drive unit 20.

As an alternative, not shown, the first motor gearwheel 66 is different from the second motor gearwheel 78, by having different number of teeth, so that a reduction ratio between the first motor shaft 64 and the main gearwheel 50 differs from a reduction ratio between the second motor shaft 74 and the main gearwheel 50. Such alternative is advantageous to finely adjust the power output of the first electric motor 62 and of the second electric motor 72.

In the disclosed example, the drive unit 20 does not comprise any reduction gear stage between the first motor gearwheel 66 and the rotor 62B of the first electric motor 62, between the second motor gearwheel 78 and the rotor 62B of the second electric motor 72, between the main gearwheel 50 and the first input member 42 of the planetary gear train 40 nor between the main gearwheel 50 and the second input member 44 of the planetary gear train 40.

In the drive unit 20, the first electric motor 62 is always driving the main gearwheel 50, whereas the second electric motor 72 is selectively driving the main gearwheel 50, depending on the configuration of the clutch 80. Such arrangement is particularly advantageous, as the drive unit 20 is capable of producing high power output when the electric vehicle 10 requires high power, for example during acceleration, thanks to the two motor assemblies 60, 70, while allowing the second motor assembly 70 to be disconnected thanks to the clutch 80, when the electric vehicle 10 requires low power, for example during deceleration or cruising. The drive unit 20 is therefore versatile, having a high overall efficiency, thus reducing power consumption of the drive unit 20 as well as wear of the components of the drive unit 20, in particular of the second electric motor 72.

In the example, the first electric motor 62 and the second electric motor 72 both extend at the differential 30, along the main axis. In other words, the first electric motor 62 and the second electric motor 72 both extend in the same direction, along the main axis, from the main gearwheel 50.

Advantageously, a length L62 of the first electric motor 62, measured parallel to the main axis X, is greater than a length L72 of the second electric motor 72, measured parallel to the main axis X. In other words, the second electric motor 72 is shorter than the first electric motor 62. Consequently, a length L72A of the stator 72A of the second electric motor 72 is shorter than a length L62A of the stator 62A of the first electric motor 62.

Having the second electric motor 72 shorter than the first electric motor 62 allows a first distance L60, measured parallel to the main axis X between the first motor gearwheel 66 and an extremity 62C of the first electric motor 62 opposite to the first motor shaft 64, to be equal to a second distance L70, measured parallel to the main axis X between the second motor gearwheel 78 and an extremity 72C of the second electric motor 72 opposite to the second motor shaft. In other words, having the second electric motor 72 shorter than the first electric motor 62 allows accommodating the clutch 80 without increasing the axial footprint of the second motor assembly 70 compared to the axial footprint of the first motor assembly 60. Hence, the drive unit 20 benefits from having two electric motors, while having one of the two electric motors selectively connected or disconnected for more versatility, while having the same axial footprint compared to a drive unit having only one electric motor. As a variant, not shown, the first distance L60 is greater than the second distance L70.

In the example, the extremities 62C, 72C of the first and second electric motors 62, 72 used to measure the first and second distances L60, L70 correspond respectively to the extremity of a housing 62D of the first electric motor 62 and of a housing 72D of the second electric motor 72.

Hence, the extremity 62C of the first electric motor 62 is aligned with the extremity 72C of the second electric motor 72, along the main axis X.

As an alternative, the extremities of the first and second electric motors 62, 72 used to measure the first and second distances L60, L70 correspond respectively to the extremity of the rotor 62B of the first electric motor 62 and of the rotor 72B of the second electric motor 72.

Similarly, a distance L60' between the first motor gearwheel 66 and an end of the rotor 62B, or an end of the stator 62A, of the first electric motor 62 opposite to the first motor gearwheel 66 is equal to a distance L70' between the second motor gearwheel 78 and an end of the rotor 72B, or an end of the stator 72A, of the second electric motor 72 opposite to the second motor gearwheel 78. Measuring the distances L60' and L70' may be preferable to measuring the distances L60 and L70, in particular if the first electric motor 60 and the second electric motor 70 do not have a similar housing, or share a common housing. As a variant, not shown, the distance L60' is greater than the distance L70'.

In addition, a distance, not shown, measured between the first motor gearwheel 66 and an end of the first motor shaft 64 opposite to the first motor gearwheel 66 is equal to a distance, not shown, measured between the second motor gearwheel 78 and an end of the second motor shaft 74 opposite to the second motor gearwheel 78. As a variant, not shown, the distance measured between the first motor gearwheel 66 and an end of the first motor shaft 64 opposite to the first motor gearwheel 66 is greater than the distance measured between the second motor gearwheel 78 and an end of the second motor shaft 74 opposite to the second motor gearwheel 78.

Advantageously, the first electric motor 62 and the second electric motor 72 share a common construction. Hence, in the example, a diameter D62B of the rotor 62B of the first electric motor 62 is equal to a diameter D72B of the rotor 72B of the second electric motor 72. Preferably, stacks of laminated steel plates are used to assemble the stator 62A of the first electric motor 62 and to assemble the stator 72A of the second electric motor 72 and identical laminated steel plates are used to assemble both stacks, said two stacks differing only by the number of laminated steel plates used, giving the two stators different lengths. Similarly, stacks of laminated steel plates are used to assemble the rotor 62B of the first electric motor 62 and to assemble the rotor 72B of the second electric motor 72 and identical laminated steel plates are used to assemble both stacks, said two stacks differing only by the number of laminated steel plates used, giving the two rotors different lengths. Such conception of the two electric motors 62, 72 allows obtaining a cheaper drive unit 20, as the two electric motors are very similar in their conceptions, sharing common parts, i.e. have a modular construction.

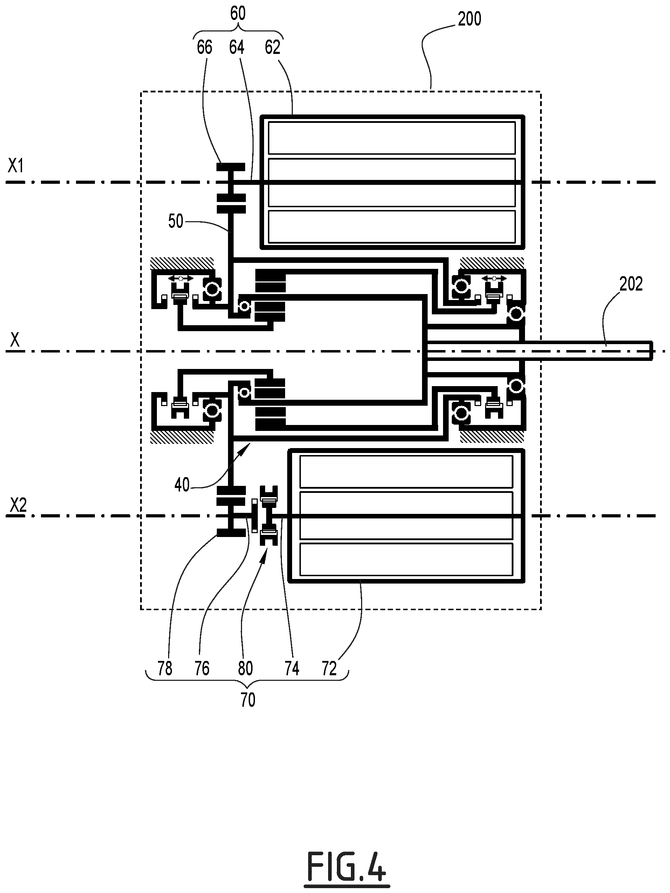

Another exemplary drive unit 200 is described in relation with Figure 4. In this other exemplary drive unit 200, the elements similar to those of the drive unit 20 bear the same references and function in the same way. In the following, only the differences between the drive unit 20 and the drive unit 200 are described. In addition, if a component is mentioned in the description of the drive unit 200 without being shown in Figure 4, it corresponds to the same element shown in Figures 2 and 3 for the drive unit 20.

The drive unit 200 is adapted to be used in the electric vehicle 10.

The main differences between the drive unit 200 and the drive unit 20 is that the drive unit 200 does not comprise a differential and only comprises one output shaft 202, extending along the main axis X. Hence, the output member 46 of the planetary gear train 40 drives the output shaft 202. In the example, the output member 46 of the planetary gear train 40 is fixedly secured to the output shaft 202, i.e. is non-selectively rotationally connected to the output shaft 202.

The drive unit 200 can be used to drive a single wheel of the vehicle 10, by connecting the output shaft 202 to said wheel, or to drive multiple wheels of the vehicle 10, for example by connecting the output shaft 202 to a differential, not shown, or more generally to a transmission.

As an alternative, not shown, of the drive unit 20 and of the drive unit 200the intermediate shaft 76 is a hollow shaft and extends around the second motor shaft 74. In other words, the intermediate shaft 76 and the second motor shaft 74 are concentric. Hence, the connecting wheel 82 being fixedly secured onto the intermediate shaft 76, it extends around the second motor shaft 74, without being rotationally connected with the second motor shaft 74 when the clutch 80 is in its neutral configuration. Similarly, the second motor gearwheel 78 being fixedly secured onto the intermediate shaft 76, it extends around the second motor shaft 74. Such alternative is particularly advantageous to increase the stiffness of the second motor assembly 70.

Moreover, in such alternative, the connecting wheel 82, the intermediate shaft 76 and the second motor gearwheel 78 can be a single part, such as a loose gearwheel, having an outer gearwheel corresponding to the second motor gearwheel 78, inner components such as inner clutch teeth corresponding to the connecting wheel 82 and adapted to engage with the engaging sleeve 84, and intermediate components rotationally connecting such outer gearwheel to such inner components corresponding to the intermediate shaft 76.

Example 1: a drive unit 20, for an electric vehicle 10, the drive unit 20 comprising:
- at least one output shaft 26, 28, extending along a main axis X,
- a planetary gear train 40, coaxially mounted with the at least one output shaft 26, 28, the planetary gear train 40 comprising a first input member 42, a second input member 44 and an output member 46, the output member 46 being connected to the at least one output shaft 26, 28 so as to drive the at least one output shaft 26, 28, the output member 46 engaging with the first input member 42 and with the second input member 44,
- a main gearwheel 50, coaxially mounted with the at least one output shaft 26, 28, the first input member 42 of the planetary gear train 40 being selectively engageable and disengageable with the main gearwheel 50 so as to be selectively rotationally connected with the main gearwheel 50 and driven by the main gearwheel 50, the second input member 44 of the planetary gear train 40 being selectively engageable and disengageable with the main gearwheel 50 so as to be selectively rotationally connected with the main gearwheel 50 and driven by the main gearwheel 50,
- a first motor assembly 60, comprising:
   ∘ a first electric motor 62, extending along a first motor axis X1 parallel to the main axis X,
   ∘ a first motor shaft 64, extending along the first motor axis X1 and rotationally connected with a rotor of the first electric motor 62, and
   o a first motor gearwheel 66, non-selectively rotationally connected with the first motor shaft 64 and meshing with the main gearwheel 50, so that the first electric motor 62 is configured to drive the main gearwheel 50 via the first motor gearwheel 66,
- a second motor assembly 70, comprising:
   ∘ a second electric motor 72, extending along a second motor axis X2 parallel to the main axis X,
   ∘ a second motor shaft 74, extending along the second motor axis X2 and rotationally connected with a rotor of the second electric motor 72,
   ∘ an intermediate shaft 76, coaxial with the second motor shaft 74,
   ∘ a second motor gearwheel 78, non-selectively rotationally connected with the intermediate shaft 76 and meshing with the main gearwheel 50, and
   ∘ a clutch 80, coaxial with the second motor shaft 74 and the intermediate shaft 76 and operable between:
      ▪ an engaged configuration, in which the second motor shaft 74 and the intermediate shaft 76 are rotationally connected so that the second electric motor 72 is configured to drive the main gearwheel 50 via the clutch 80 and the second motor gearwheel 78, and
      ▪ a neutral configuration, in which the second motor shaft 74 and the intermediate shaft 76 are rotationally disconnected so that the second electric motor 72 is configured not to drive the main gearwheel 50,
wherein a length L62 of the first electric motor 62, measured parallel to the main axis X, is greater than a length L72 of the second electric motor 72, measured parallel to the main axis X.

Example 2: the drive unit 20 of example 1, wherein a first distance L60, measured parallel to the main axis X between the first motor gearwheel 66 and an extremity 62C of the first electric motor 62 opposite to the first motor shaft 64, is equal to a second distance L70, measured parallel to the main axis X between the second motor gearwheel 78 and an extremity 72C of the second electric motor 72 opposite to the second motor shaft 74.

Example 3: the drive unit 20 of any one of examples 1-2, wherein the first motor gearwheel 66 is identical to the second motor gearwheel 78.

Example 4: the drive unit 20 of any one of examples 1-3, wherein the first motor gearwheel 66 is aligned with the second motor gearwheel 78, along the main axis X.

Example 5: the drive unit 20 of any one of examples 1-4, wherein the intermediate shaft 76 is located between the second motor gearwheel 78 and the second motor shaft 74, along the second motor axis X2.

Example 6: the drive unit 20 of any one of examples 1-5, wherein the first electric motor 62 and the second electric motor 72 are both located on a same side of the main gearwheel 50, along the main axis X.

Example 7: the drive unit 20 of any one of examples 1-6, wherein the clutch 80 is a dog clutch.

Example 8: the drive unit 20 of any one of examples 1-7, wherein the clutch 80 comprises:
- a connecting wheel 82, fixedly secured onto the intermediate shaft 76 and comprising splines, and
- an engaging sleeve 84, concentrically mounted around the second motor shaft 74 and axially moveable relative to the second motor shaft 74 along the second motor axis X2 between:
   ∘ an engaged position, in which the engaging sleeve 84 is engaged with the splines of the connecting wheel 82 so that the clutch 80 is in its engaged configuration, and
   ∘ a neutral position, in which the engaging sleeve 84 is disengaged from the splines of the connecting wheel 82 so that the clutch 80 is in its neutral configuration.

Example 9: the drive unit 20 of any one of examples 1-8, wherein the first motor axis X1 and the second motor axis X2 are equidistant from the main axis X.

Example 10: the drive unit 20 of any one of examples 1-9, wherein an extremity 62C of the first electric motor 62 opposite to the first motor shaft 64 is aligned with an extremity 72C of the second electric motor 72 opposite to the second motor shaft 74, along the main axis X.

Example 11: the drive unit 20 of any one of examples 1-10, wherein a diameter D62B of the rotor 62B of the first electric motor 62 is equal to a diameter D72B of the rotor 72B of the second electric motor 72.

Example 12: the drive unit 20 of any one of examples 1-11, wherein the drive unit 20 further comprises a carrying structure 56, the main gearwheel 50 being fixedly secured to the carrying structure 56 and rotationally connected with the carrying structure 56, the planetary gear train 40 being mounted inside of the carrying structure 56.

Example 13: the drive unit 20 of any one of examples 1-12, further comprising a first control sleeve 52, configured to selectively rotationally connect or rotationally disconnect the first input member 42 with the main gearwheel 50, and a second control sleeve 54, configured to selectively rotationally connect or rotationally disconnect the second input member 44 with the main gearwheel 50.

Example 14: the drive unit 20 of any one of examples 1-13, further comprising a housing 22, and wherein the first input member 42 and the second input member 44 are both selectively engageable and disengageable with the housing 22.

Example 15: the drive unit 20 of examples 13 and 14 considered in combination, wherein the first control sleeve 52 is further configured to selectively engage or disengage the first input member 42 with the housing 22, and wherein the second control sleeve 54 is further configured to selectively engage or disengage the second input member 44 with the housing 22.

Example 16: the drive unit 20 of any one of examples 1-15, wherein the first input member 42 is a ring gearwheel of the planetary gear train 40, wherein the second input member 44 is a sun gearwheel of the planetary gear train 40 and wherein the output member 46 is a planet carrier of the planetary gear train 40.

Example 17: the drive unit 20 of any one of examples 1-16, wherein the first motor shaft 64 is securely fixed to the rotor 62B of the first electric motor 62 and directly driven by the rotor 62B of the first electric motor 62 and wherein the second motor shaft 74 is securely fixed to the rotor 72B of the second electric motor 72 and directly driven by the rotor 72B of the second electric motor 72.

Example 18: the drive unit 20 of any one of examples 1-17, wherein the drive unit 20 does not comprise any reduction gear stage between the first motor gearwheel 66 and the rotor 62B of the first electric motor 62, between the second motor gearwheel 78 and the rotor 72B of the second electric motor 72, between the main gearwheel 50 and the first input member 42 of the planetary gear train 40 nor between the main gearwheel 50 and the second input member 44 of the planetary gear train 40.

Example 19: the drive unit 20 of any one of examples 1-18, wherein the first electric motor 62 is configured to always be engaged with the first motor gearwheel 66, the drive unit 20 having no means for disconnecting the first electric motor 62 from the first motor gearwheel 66.

Example 20: the drive unit 20 of any one of examples 1-19, wherein the at least one output shaft 26, 28 comprises a left drive shaft 26 and a right drive shaft 28, both extending along the main axis X and configured to drive wheels 12, 14 of the electric vehicle 10, wherein the drive unit 20 further comprises a differential 30, coaxially mounted with the left drive shaft 26 and the right drive shaft 28, and configured to drive the left drive shaft 26 and the right drive shaft 28, and wherein the output member 46 is connected to the differential 30 so as to drive the differential 30.

Example 21: the drive unit 20 of example 20, wherein the first electric motor 62 and the second electric motor 72 both extend at the differential 30, along the main axis X.

Example 22: the drive unit 20 of any one of examples 20-21, wherein the output member 46 of the planetary gear train 40 is integral with an input member 32 of the differential 30.

Example 23: the drive unit 20 of any one of examples 20-22 considered in combination with example 12, wherein the differential 30 is mounted inside of the carrying structure 56.

Example 24: an electric vehicle 10, comprising the drive unit 20 of any one of examples 1-23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "engaged", "connected" or "coupled" to another element, it can be directly connected or coupled to the other element, or intervening elements may be present. In contrast, when an element is referred to as being "directly engaged", "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A drive unit (20), for an electric vehicle (10), the drive unit (20) comprising:
- at least one output shaft (26, 28), extending along a main axis (X),
- a planetary gear train (40), coaxially mounted with the at least one output shaft (26, 28), the planetary gear train (40) comprising a first input member (42), a second input member (44) and an output member (46), the output member (46) being connected to the at least one output shaft (26, 28) so as to drive the at least one output shaft (26, 28), the output member (46) engaging with the first input member (42) and with the second input member (44),
- a main gearwheel (50), coaxially mounted with the at least one output shaft (26, 28), the first input member (42) of the planetary gear train (40) being selectively engageable and disengageable with the main gearwheel (50) so as to be selectively rotationally connected with the main gearwheel (50) and driven by the main gearwheel (50), the second input member (44) of the planetary gear train (40) being selectively engageable and disengageable with the main gearwheel (50) so as to be selectively rotationally connected with the main gearwheel (50) and driven by the main gearwheel (50),
- a first motor assembly (60), comprising:
∘ a first electric motor (62), extending along a first motor axis (X1) parallel to the main axis (X),
∘ a first motor shaft (64), extending along the first motor axis (X1) and rotationally connected with a rotor of the first electric motor (62), and
∘ a first motor gearwheel (66), non-selectively rotationally connected with the first motor shaft (64) and meshing with the main gearwheel (50), so that the first electric motor (62) is configured to drive the main gearwheel (50) via the first motor gearwheel (66),
- a second motor assembly (70), comprising:
∘ a second electric motor (72), extending along a second motor axis (X2) parallel to the main axis (X),
∘ a second motor shaft (74), extending along the second motor axis (X2) and rotationally connected with a rotor of the second electric motor (72),
∘ an intermediate shaft (76), coaxial with the second motor shaft (74),
∘ a second motor gearwheel (78), non-selectively rotationally connected with the intermediate shaft (76) and meshing with the main gearwheel (50), and
∘ a clutch (80), coaxial with the second motor shaft (74) and the intermediate shaft (76) and operable between:
▪ an engaged configuration, in which the second motor shaft (74) and the intermediate shaft (76) are rotationally connected so that the second electric motor (72) is configured to drive the main gearwheel (50) via the clutch (80) and the second motor gearwheel (78), and
▪ a neutral configuration, in which the second motor shaft (74) and the intermediate shaft (76) are rotationally disconnected so that the second electric motor (72) is configured not to drive the main gearwheel (50),
wherein a length (L62) of the first electric motor (62), measured parallel to the main axis (X), is greater than a length (L72) of the second electric motor (72), measured parallel to the main axis (X).

2. The drive unit (20) of claim 1, wherein a first distance (L60), measured parallel to the main axis (X) between the first motor gearwheel (66) and an extremity (62C) of the first electric motor (62) opposite to the first motor shaft (64), is equal to a second distance (L70), measured parallel to the main axis (X) between the second motor gearwheel (78) and an extremity (72C) of the second electric motor (72) opposite to the second motor shaft (74).

3. The drive unit (20) of any one of claims 1-2, wherein the first electric motor (62) and the second electric motor (72) are both located on a same side of the main gearwheel (50), along the main axis (X).

4. The drive unit (20) of any one of claims 1-3, wherein the clutch (80) is a dog clutch.

5. The drive unit (20) of any one of claims 1-4, wherein the clutch (80) comprises:
- a connecting wheel (82), fixedly secured onto the intermediate shaft (76) and comprising splines, and
- an engaging sleeve (84), concentrically mounted around the second motor shaft (74) and axially moveable relative to the second motor shaft (74) along the second motor axis (X2) between:
∘ an engaged position, in which the engaging sleeve (84) is engaged with the splines of the connecting wheel (82) so that the clutch (80) is in its engaged configuration, and
∘ a neutral position, in which the engaging sleeve (84) is disengaged from the splines of the connecting wheel (82) so that the clutch (80) is in its neutral configuration.

6. The drive unit (20) of any one of claims 1-5, wherein an extremity (62C) of the first electric motor (62) opposite to the first motor shaft (64) is aligned with an extremity (72C) of the second electric motor (72) opposite to the second motor shaft (74), along the main axis (X).

7. The drive unit (20) of any one of claims 1-6, wherein a diameter (D62B) of the rotor (62B) of the first electric motor (62) is equal to a diameter (D72B) of the rotor (72B) of the second electric motor (72).

8. The drive unit (20) of any one of claims 1-7, wherein the drive unit (20) further comprises a carrying structure (56), the main gearwheel (50) being fixedly secured to the carrying structure (56) and rotationally connected with the carrying structure (56), the planetary gear train (40) being mounted inside of the carrying structure (56).

9. The drive unit (20) of any one of claims 1-8, further comprising a first control sleeve (52), configured to selectively rotationally connect or rotationally disconnect the first input member (42) with the main gearwheel (50), and a second control sleeve (54), configured to selectively rotationally connect or rotationally disconnect the second input member (44) with the main gearwheel (50).

10. The drive unit (20) of any one of claims 1-9, further comprising a housing (22), and wherein the first input member (42) and the second input member (44) are both selectively engageable and disengageable with the housing (22).

11. The drive unit (20) of any one of claims 1-10, wherein the first input member (42) is a ring gearwheel of the planetary gear train (40), wherein the second input member (44) is a sun gearwheel of the planetary gear train (40) and wherein the output member (46) is a planet carrier of the planetary gear train (40).

12. The drive unit (20) of any one of claims 1-11, wherein the drive unit (20) does not comprise any reduction gear stage between the first motor gearwheel (66) and the rotor (62B) of the first electric motor (62), between the second motor gearwheel (78) and the rotor (72B) of the second electric motor (72), between the main gearwheel (50) and the first input member (42) of the planetary gear train (40) nor between the main gearwheel (50) and the second input member (44) of the planetary gear train (40).

13. The drive unit (20) of any one of claims 1-12, wherein the at least one output shaft (26, 28) comprises a left drive shaft (26) and a right drive shaft (28), both extending along the main axis (X) and configured to drive wheels (12, 14) of the electric vehicle (10), wherein the drive unit (20) further comprises a differential (30), coaxially mounted with the left drive shaft (26) and the right drive shaft (28), and configured to drive the left drive shaft (26) and the right drive shaft (28), and wherein the output member (46) is connected to the differential (30) so as to drive the differential (30).

14. The drive unit (20) as in claim 13, wherein the output member (46) of the planetary gear train (40) is integral with an input member (32) of the differential (30).

15. An electric vehicle (10), comprising the drive unit (20) of any one of claims 1-14.
